Europäisches Patentamt

European Patent Office

Office européen des brevets

(19)

(11) **EP 1 467 554 A2**

(12) **EUROPEAN PATENT APPLICATION**

(43) Date of publication:
**13.10.2004 Bulletin 2004/42**

(51) Int Cl.⁷: $H04N\ 1/50$

(21) Application number: **04101414.3**

(22) Date of filing: **06.04.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **11.04.2003 US 411770**

(71) Applicant: **Agfa Corporation**
**Ridgefield Park, NJ 07660-2199 (US)**

(72) Inventor: **Brady, Thomas**
**01844, Methuen (US)**

(74) Representative: **De Niel, Marc Alfons Jozef**
**Agfa-Gevaert N.V.**
**Corporate Intellectual Property Department 3800**
**Patent Administration**
**Septestraat 27**
**2640 Mortsel (BE)**

(54) **Method and system for printing press image distortion compensation.**

(57)    A system (100) for creating offset printing media (18) in response to image data that have to be scaled to compensate for web distortion, comprises an imaging engine (18) for exposing offset printing media (5) in response to scaled image data and a print drive system (16) that receives plate-level image data, generates scaled image data in response to web distortion information and sends the image data to the imaging engine (18).

   The system is characterized in that the scaling is performed on the plate-level image data, as opposed to on the source image data, typically prior to halftoning.

FIG.5

**Description**

FIELD OF THE INVENTION

The present invention relates to a system for creating offset printing media from image data. More specifically the invention is related to an imaging engine and a print drive system.

BACKGROUND OF THE INVENTION

In web offset printing, a paper web travels through multiple printing press units. Each unit sequentially applies by means of a printing master a colorant image onto the paper web. The combination of the colorant images on the paper web creates colored images. A common four-colorant printing process uses cyan, magenta, yellow, and black colorants under the form of ink. The optical and physical interaction between the four colorant images enables to print full color images.

The physical principle, on which the creation of a printing master is based, is to image-wise alter the physical properties of a surface in such a way that it selectively attracts or repels ink or fountain solution. By applying an emulsion of ink and fountain solution to the surface, an image wise distribution of ink originates on the surface that in a subsequent step is transferred to the web for printing.

The application of ink and fountain solution, together with the action of the printing press can change the paper web dimensions. A first factor contributing to such change is the exposure of the paper to liquids. As the paper receives ink and fountain solution during each subsequent pass through a printing press unit, it generally expands, which results in an overall increase of its size. Other factors that contribute to dimensional changes of the web are the squeezing of the paper by the rollers of the printing press units and the tension that is applied to the web as it is pulled along.

Usually, the first ink that is applied gives rise to the most growth, with the amount of additional growth decreasing with subsequent inks. Often, there is little or no observable growth when the final ink is printed.

Under specific conditions, the paper web may actually undergo shrinkage. Sometimes press operators locate dryers or fans between printing units to reduce the drying time of the ink and to increase the speed at which the press can be operated. This drying can cause the web to contract.

In what follows the general term distortion is used to designate a change in size of the web along any of its dimensions.

The distortion of the web, is also dependent on other factors such as the type of print media. Typically, distortion is more prevalent on porous media, e.g., newsprint, than it is on coated stock. Other parameters that can contribute to dimensional changes are ambient temperature and humidity, and the amount of ink coverage related to a specific lay out. These factors can change from job to job and in particular cases even during the press run of a single job.

Because web distortion alters the original dimensions of the printed colorant images, these images - absent intervention - will not align correctly.

This misalignment of the colorant images is referred to as misregistration. Misregistration leads to color fringes in high contrast areas, blurring in detail contrast areas and color distortions in flat areas of the printed result. Misregistration hence undesirably reduces image reproduction quality.

To correct for misregistration, printing presses have controls that enable to slightly translate and rotate the different colorant images relative to each other. With these controls, it is possible to align the different colorant images along their horizontal and vertical dimensions, and to bring one location in the different colorant images, for example their centers, in perfect register. Assuming that the dimensions of the four colorant planes are identical, this means that the other parts of the colorant images will also be in register. This condition, however, is often not met in practical situations, specifically in the presence of web distortion. As a result a press operator can register only one location in the colorant images, for example the center of the image, and misregistration will still occur in other locations in the image.

Even in the presence of small amounts of relative web distortion, the absolute amount of misregistration between the colorant images can become substantial. Take, for example the case of printing plate with a size of 1016 mm (40") along one of its dimensions and a relative web distortion of 1% along the same dimension. If the centers of the colorant images are perfectly registered, the absolute paper web distortion near the boundaries of the image can amount to 1%* (1016 mm)/2 or 5 mm (0.2"), which is totally unacceptable from the viewpoint of image quality. From this follows that the printing press controls are generally inadequate for registering all the locations of the colorant images.

One prior art technique to minimize the effect of web distortion on image quality makes use of the fact that in many cases a colorant image is made up from several individual pages that are combined into one plate-level colorant image that corresponds to the size of a printing master. This process is called "imposition". By translating during the imposition process the centers of the colorant images of each individual page, it is possible to achieve perfect registration at each center of each page. Because the size of the dimensions of each individual page is often much smaller than the size of the printing master, the same relative web distortion with this method results in a smaller absolute misregistration. If, for example, the size of a page along its length is 254 mm (10") and the relative web distortion is, as in the previous example, 1%, than the registration of the center of the page will result in an absolute misregistration of 1%* (254 mm)/2 or 1.3 mm (0.05"). Unfortunately even this small misregistration results in visible and undesirable artifacts. Furthermore, the advantage of this method breaks down when the size of an individual page becomes larger. In the particular case that the size of the page is equal to the size of printing master, the method offers even no advantage at all.

Another prior art technique to manage image quality degradation caused by paper web distortion is integrated in the raster image processing. Prior to imposition, the original source images of the individual pages are represented in PostScript@ format or PDF® format. A "raster image processor" (RIP) is used to convert the pages represented in one of these formats into raster images at the spatial (number of pixels per mm) and tonal (number of tone levels per pixel) resolution of the imaging device that creates the printing masters for the different colorants. According to the described prior art technique, a scaling operation is included as part of the raster image processing of each individual page that compensates for the effects of the paper web distortion. The scaling can be anamorphic, to accommodate for differences of the web distortions along the horizontal and vertical dimensions. The raster image processed pages are in an imposition step combined into a single plate-level image for each colorant. This technique, certainly when used in combination with the other prior art techniques in theory enables to achieve very precise registration between the different colorant images on the printed web. The problem with this approach, however, is that at the time of the raster image processing, information concerning the target printing press and media may not be available yet, which would prevent the proper selection of scaling factors along the different dimensions. Another problem with this prior art technique is that the raster image processed images are usually subject to proofing - either before or after the imposition step - to verify their contents, lay out and image quality. The traditional proofing systems consist of combining the colorant images - using analog or digital techniques - in a process that simulates the printing press. Existing proofing systems, however, do not simulate the effects of web distortion. The consequence of this is that the compensation for page web distortion of the colorant images that was performed as part of the raster image processing must be undone prior to proofing with an existing proofing process. This involves an additional step that requires additional storage and processing of large volumes of data and that is hence undesirable.

SUMMARY OF THE INVENTION

The present invention relates to a system for exposing offset printing media from image data.
According to one aspect of the invention, the system exposes offset printing media from image data that have been scaled to compensate for web distortion.
The system comprises

- a print drive system that receives plate-level image data, generates scaled image data in response to paper web distortion information data and sends the scaled image to an imaging engine; that
- exposes offset printing media in response to said scaled image data.

The system is distinguished from prior art systems in that the scaling is performed on the plate-level image data, as opposed to on the page-level image data, typically prior to halftoning, and thereby avoids the previously described problems.
The system preferably scales in real time. That is, the print drive system generates the scaled image data during the transfer of the scaled image data to the imaging engine.
The print drive system generates the scaled image data by adding pixels to or removing pixels from the plate-level image data. The added or removed pixels are preferably stochastically distributed between rows and or columns of the original image data.
In one embodiment, the offset printing media are films. These films are used to create printing masters for a web printing press.
In another embodiment, the offset printing media are printing plates that serve as the printing masters on a web printing press.
In yet another embodiment, the offset printing media are rollers of a web printing press that serve as the printing masters.
In the current embodiment, the system includes a raster image processor that generates page-level colorant image data. The system also includes an imposition system to which the page-level image data of more than one page are sent and where they are combined into plate-level image data for each colorant.

According to another aspect, the invention features a method for exposing offset printing media from image data that have to be scaled to compensate for web distortion. The method comprises generating scaled image data from plate-level image data and in response to web distortion information, sending the scaled image data to an imaging engine and creating the offset printing media in response to said scaled image data.

The invention also features a web printed image. This image comprises areas corresponding to page-level image data and indicia for assessing web distortion. The indicia enable to measure and characterize web distortion.

In general, according to still another aspect, the invention features a method for compensating web distortion. This method comprises characterizing the web distortion by measuring it at multiple places on a web and compensating for it by scaling plate-level image data in response to the measured web distortion.

The above and other features of the invention including various novel details of construction and combinations of parts, and other advantages, will now be described with reference to the accompanying drawings and pointed out in the claims. It will be understood that the particular method and device embodying the invention are shown by way of illustration and not as a limitation of the invention. The principles and features of this invention may be employed in various and numerous embodiments without departing from its scope. Further advantages and embodiments of the present invention will become apparent from the following description and drawings.

BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention.

Overview of the drawings:

Fig. 1 is a schematic diagram of an offset web printing press system according to the present invention;

Fig. 2 is a flow diagram illustrating the process of distortion characterization, according to the present invention;

Figs. 3A and 3B are wide and a close-up plan views, respectively, of a printed test image used for web distortion measurement and characterization;

Fig. 4 is a schematic view showing how measurements of web distortion are used to build a web distortion information database according the invention;

Fig. 5 is a flow diagram illustrating the process to create printing masters according to the present invention;

Fig. 6 is a flow diagram illustrating the process for scaling the plate-level image data according to the preferred embodiment; and

Fig. 7 is a schematic diagram of scaling mask for identifying pixels to be deleted or duplicated.

DETAILED DESCRIPTION OF THE INVENTION

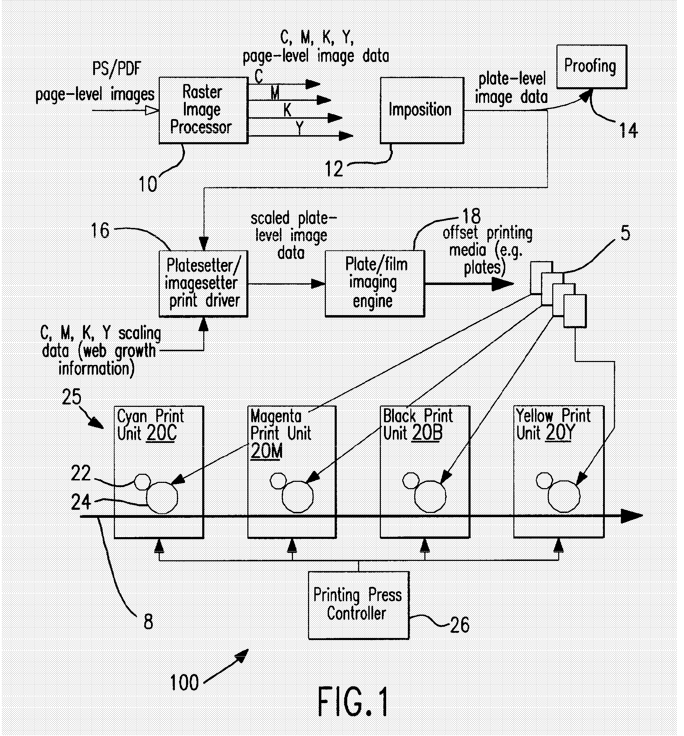

Fig. 1 shows an offset web printing press system (100) that has been constructed according to the principles of the present invention.

In the most common implementation, the input source file is a PostScript® file (.ps) or a Portable Document Format® file (.pdf). Such a file contains all the elements (text, graphics and images) that describe a page that is to be printed on the paper web (8). In the case of the Portable Document Format, the file may contain a description of more than one page.

A raster image processor (10) is used to convert the source file(s) into an image format that is appropriate for offset printing. Specifically this means that for each page a number of colorant images is calculated that corresponds with the number of colorants used for printing the pages on the press and that have the same spatial (number of pixels per mm) and tonal resolution (number of possible tone levels per pixel) as the imaging engine (18).

In the most common case four colorants are used: cyan, magenta, black and yellow. Each colorant image (C, M, B, Y) corresponds with one of the printing press units (20C, 20M, 20B, 20Y). The colorant images that are produced by the raster image processor are called "page-level" image data, because they apply to image data of one single page.

The calculation of the page level colorant images by the raster image processor is done in two steps.

In a first step, a set of continuous tone colorant images is calculated - one for each colorant. A continuous tone colorant image is an image representation in which the intensity of each pixel is represented using essentially a continuous tone scale - for example a tone scale that can represent 256 distinct intensity values.

In a second step the continuous tone colorant images are converted into halftoned colorant images by means of a halftoning process. A halftoned colorant image is an image representation in which the intensity of a pixel can have only one out of limited number possible values that correspond to the available printable ink densities of a printing system. Offset printing presses can typically print only two tone levels - corresponding to printing ink or no ink at a given location - so the halftoned colorant images in this particular case are binary images.

Information on halftoning techniques is found in the book "Digital Halftoning" by Robert Ulichney, published by "The MIT Press Cambridge". The most common approach in the context of the described invention uses an array of thresholds that spatially correspond to the addressable pixels of the imaging engine (18). At each pixel location, the value of the continuous tone image is compared with the value of the threshold at the corresponding location in the mask. If the threshold is larger, ink is printed at that pixel location, otherwise no ink is printed. By carefully organizing the values and the location of the thresholds in the mask, the loss of image quality due to the halftoning is minimized. Typically a periodical arrangement is obtained of "halftone dots" that consist of clusters of pixels where ink is printed. The periodical arrangement is characterized by an angle and a frequency.

An improvement consists of using a small mask (tile) and replicating it periodically to obtain threshold values at all pixel locations. An important concept in the context of halftoning is "cell size". Cell size refers to the distance (usually expressed in number of pixels) between the centers of two neighboring halftone dots. This size corresponds to the side of a square area that contains one halftone dot. An example is the case of a halftone in which the dots are spaced at a distance of 1/62.5 cm. If the raster image processor calculates the colorant images at a spatial resolution of 1000 pixels per cm, than the cell size equals 1000/62.5 pixels or 16 pixels. In general, the cell size is not necessarily an integer number

**[0040]** In summary, the raster image processing yields a set of halftoned colorant images at page-level.

A typical printing press has an area that is large enough to fit several pages. For example, the size of a common printing plate is 1016 mm (40") in length and 508 mm (20") in width. This means that generally six or eight pages can be laid out onto each printing master and be printed in one pass.

It is the task of the imposition system (12) to combine for each colorant the page-level halftoned images of the different pages into one large halftoned image that has the size of a printing master. The data sets that result from this imposition operation are called "plate-level" image data, because they apply to image data of one printing master, which in the most common case is a printing plate.

In summary, plate-level image data are the result of an imposition step in which page-level data produced by a raster image processor are combined into one large image for each colorant that corresponds with the size of a printing master.

At this stage a digital proofing system (14) is often used to verify the contents, lay out and image quality of the plate-level image data. The proofing involves the combination, using analog or digital techniques, of the plate-level image data corresponding to the different colorants in a way that simulates the printing press.

According to the present invention, the plate-wise colorant images are preferably <u>not</u> scaled prior to proofing to compensate for web distortion, and hence the proofing process can be implemented using traditional systems and methods, i.e. no scaling of the plate-level colorant images to their original size is required as part of the proofing process.

According to the present invention, the plate-level colorant image data are also received by a print drive system (16) that spools the data to a plate or image setter (18), or - in the case of a computer-to-press system - an imaging system that creates the printing masters directly on rollers of the printing press.

The task of the print drive system is to collect the incoming plate-level colorant image data in a buffer and to provide them to the imaging engine (18) at the rate that they are consumed. In one typical system, the imaging engine (18) consumes the plate-level image data at a rate of 16 Megabytes per second.

According to one aspect of the invention, the print drive system (16) scales the plate-level colorant image data that were generated by the imposition system (12) to compensate for the expected web distortion that takes place on the printing press (25).

For the purpose of this compensation, web distortion information is specified to the print drive system. In the present invention, web distortion is measured in different directions from the center of each printed colorant image towards the boundaries. The directions are described as Easterly, Westerly, Northerly, and Southerly and are measured for each colorant image separately. This is necessary because each of the separate colorant images generally exhibit different amounts of distortion relative to a reference colorant image.

The task of the imaging engine (18) is to expose the offset printing media in response to the plate-level colorant image data from the print drive system. In a first example the imaging engine is a computer-to-plate system and the offset printing media are printing plates that serve as printing masters on the press. In a second example the imaging engine is a computer-to-film system, and the offset printing media are films, that are used to create printing plates by means of an additional contact-printing step. These plates are used as the printing masters on the printing press. In yet another example, the imaging engine is a computer-to-press system, and the offset printing media are rollers on the printing press that serve as printing masters. In summary, the imaging step yields a set of printing masters, one for each colorant, that are either directly obtained (as in the case of computer-to-press and computer-to-plate systems) or indirectly (as in the case of computer to film).

In the most common case, a set of four printing plates (5) is obtained: one for printing with cyan, magenta, black and yellow ink. These four plates (5) are mounted onto the corresponding printing press units (20C, 20M, 20B, 20Y) and serve as printing masters. Specifically, the plates (5) are secured to printing drums (24), in each of the print units (20C, 20M, 20B, 20Y). An inking roller (22) is used to apply the emulsion of ink and fountain solution onto the printing master on the drum (24) to thereby create an image wise distribution of ink on the surface. This image of ink distribution is next transferred by means of an offset roller (not shown on the drawings) to the web. The press (100) is operated under the control of printing press controller (26).

The web (5) successively passes through each of these printing press units 20C, 20M, 20B, and 20Y, whereby each unit applies an image wise distribution of colorant, thereby creating a full color image.

Distortion Characterization

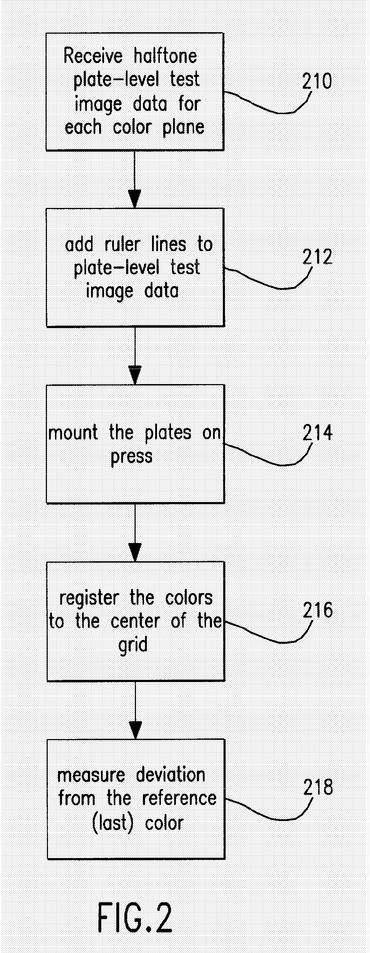

Fig. 2 shows a system for distortion characterization according to the present invention. The distortion characterization is used to create web distortion information that is provided to the print drive system (16). In the next paragraphs the steps in Fig. 2 are further explained.

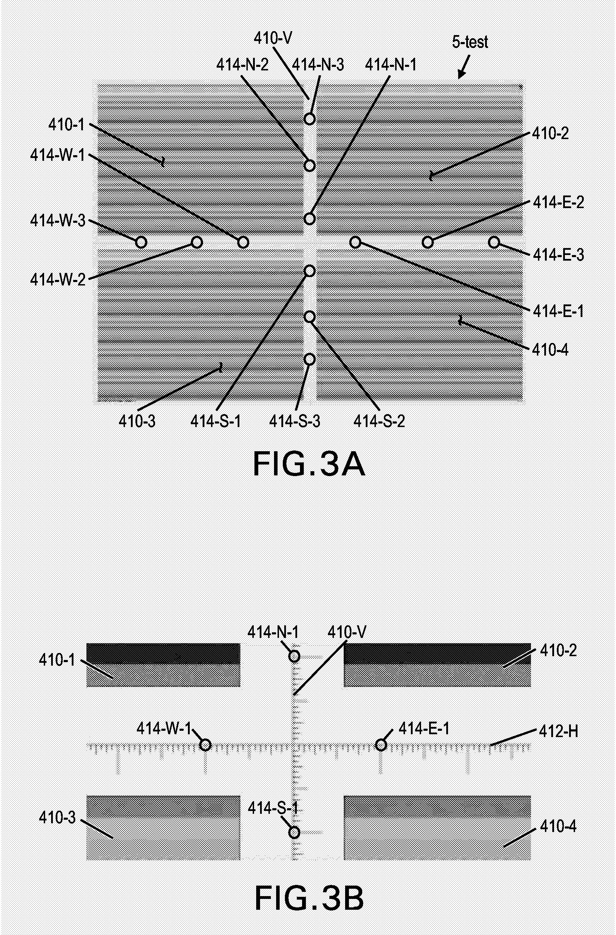

In step 210, the print drive system (16) receives for each colorant plate-level test image data. The test image data are designed so that they are representative for the plate-level image data for which web-distortion compensation is to be determined. This means, for example, that for each colorant its total amount and geometric distribution in the test image and the image for which web distortion compensation is determined should be approximately equal. As a result of this choice, the distortion caused by the colorant absorption by the web in both plate-level images will also be approximately equal. An example of plate-level test image data is provided in Fig. 3A. The plate-level test image (5-test) in this case consists of horizontal bars of which the width is selected so that the average amount of colorant in each zone (210-1, 410-2, 410-3, 410-4) is approximately the same as the average amount of colorant in each corresponding zone of the plate-level image for which web distortion compensation is determined. According to one embodiment, the test image is the image itself for which web distortion compensation is sought.

Next, in step (212) a ruler grid (410-V, 412-H) is added by the print drive system to the plate-level test image data. An example of a ruler grid is shown in Figure 3A with a magnification shown in Fig. 3B. The indicia of the ruler grid can be printed at intervals of, for example, 2 mm (1"/12) or less. In one implementation, the operator selects whether metric or inch rulers are used. The ruler indicia are added by the print drive system (16) to the otherwise blank areas between the page regions (410-1, 410-2, 410-3, 410-4) of each the plate-level colorant image of the test image (5-test).

One characteristic of the ruler grids (410-V, 412-H) is that both a vertical axis 410-V and a horizontal axis 412-H are present in each of the colorant planes. The purpose of this is to enable the measurement of web distortion in four directions starting from the center of he page, as it is introduced during subsequent printing passes of the test image (5-test) through the different printing press units.

For the purpose of the present example, the target plate dimensions are 762 mm (30") high from top to bottom and 1016 mm (40") wide from left to right and four masters are used for printing with cyan, magenta black and yellow colorant. However, the present invention can be applied to other lays outs, test image data, colorant schemes and a different order of colorant application or plate dimensions.

Having the plate-level test image and ruler grid defined, the next step is to create a set of printing masters of the test image (5-test), for example by means of computer-to-film, a computer-to-plate or a computer-to-press system and - in a step (214) - to mount these masters on the printing press units (20C, 20M, 20B, 20Y) of the printing press (25).

A typical printing press allows the masters in the successive printing units 20C, 20M, 20B, and 20Y to be registered with respect to each other within a limited degree of adjustment. In this specific case, the printing masters of the test image (5-test) are adjusted in a step (216) so that perfect registration is achieved between the crossings of the horizontal (412-H) and the vertical (412-V) rulers that were defined in step (212). A test web is then printed using the printing masters of test image (5-test).

In step (218), the deviation between the grids of the various colorant planes is measured from the printed web in order to characterize the web distortion.

Referring back to Fig. 3A, measurements are made of the printed ruler grid for each of the colorant planes. Specifically, for each of the vertical portion 410-V and the horizontal portion 412-H of the ruler grid, the indicia corresponding to different colorant images are generally shifted relative to each other due to web distortion of the uncompensated test image (5-test).

An operator or an automatic image recognition system refers to the ruler indicia at predetermined measurement positions, such as three equally spaced distances from the grid origin. These position are defined for each of the legs of the grid, such as positions, 414-N-1, 414-N-2, 414-N-3, for the northerly extending leg of the grid, positions 414-S-1, 414-S-2, 414-S-3 for the southerly extending leg of the grid, 414-E-1, 414-E-2, 414-E-3, for the easterly extending leg of the grid, and finally 414-W-1, 414-W-2, 414-W-3, for the westerly extending leg of the ruler grid.

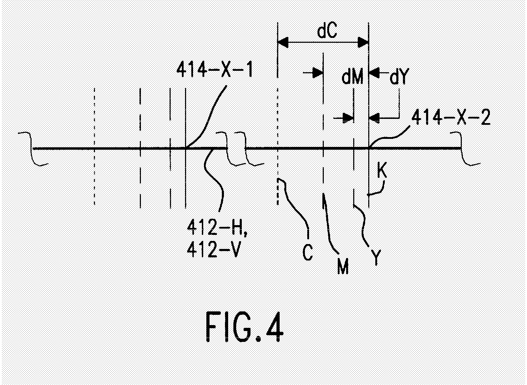

With reference to Fig. 4, at each of the measurement positions 414, web distortion is characterized. For example at position 414-X-2, there are corresponding indicia for black (K), yellow (Y), magenta (M) and cyan (C). In the given example, the black (K) index is used as the reference. From this, the distances dC, dM and dY, and are measured. These are distances between the corresponding indices for each of the other colors cyan, magenta and yellow.

From this information a database is created as illustrated in Table 1 below. This database holds the distortion measurements for each colorant at each position 414 and at each distance from the origin in each of the directions.

Table 1

| (Web Distortion Information Database) | | | | |
|---|---|---|---|---|
| | Cyan | Magenta | Black | Yellow |
| Easterly distortion | dC at 414-1E | dM at 414-1E | dK at 414-1E | dY at 414-1E |
| | dC at 414-2E | dM at 414-2E | dK at 414-2E | dY at 414-2E |
| | dC at 414-3E | dM at 414-3E | dK at 414-3E | dY at 414-3E |
| Westerly distortion | dC at 414-1W | dM at 414-1W | dK at 414-1W | dY at 414-1W |
| | dC at 414-2W | dM at 414-2W | dK at 414-2W | dY at 414-2W |
| | dC at 414-3W | dM at 414-3W | dK at 414-3W | dY at 414-3W |
| Northern distortion | dC at 414-1N | dM at 414-1N | dK at 414-1N | dY at 414-1N |
| | dC at 414-2N | dM at 414-2N | dK at 414-2N | dY at 414-2N |
| | dC at 414-3N | dM at 414-3N | dK at 414-3N | dY at 414-3N |
| Southern distortion | dC at 414-1S | dM at 414-1S | dK at 414-1S | dY at 414-1S |
| | dC at 414-2S | dM at 414-2S | dK at 414-2S | dY at 414-2S |
| | dC at 414-3S | dM at 414-3S | dK at 414-3S | dY at 414-3S |

The horizontal axis of the web grow information database identifies the colorant being described. The vertical axis refers to distortion in at different distances from the grid origin and in different directions. The distortion is always characterized from the center of the image to each edge of the image and is typically measured in millimeters or inches.

In the present embodiment, a positive distortion value means the colorant index is further from the center than the corresponding index of the reference color, which means that the image has (locally) increased in size. A negative value means the colorant index is closer to the center than the corresponding index of the reference color, meaning that the image has (locally) decreased in size.

It is not necessary to specify distortions for colorant images that have no measured distortion. This is specifically the case for the reference colorant image, which here is black (B).

As discussed previously, the amount of web distortion depends on the particular press and web stock that is used for printing. In the preferred embodiment, a database of web distortion information for various printing presses and web media is maintained. An example of such a database is shown in Table 2.

Table 2

| (Printing Press/Media Database) | | | | |
|---|---|---|---|---|
| | Type 1 web media (newsprint) | Type 2 web media (coated stock) | Type 3 web media (heavy weight stock) | Type 4 web media |
| Printing press 1 | web distortion information (database) 1, 1 | web distortion information (database) 1, 2 | web distortion information (database) 1, 3 | web distortion information (database) 1, 4 |
| Printing press 2 | web distortion information (database) 2, 1 | web distortion information (database) 2, 2 | web distortion information (database) 2, 3 | web distortion information (database) 2, 4 |
| Printing press 3 | web distortion information (database) 3, 1 | web distortion information (database) 3, 2 | web distortion information (database) 3, 3 | web distortion information (database) 3, 4 |

Each entry in this database has web distortion information as described in Table 1. For example, printing press 1 in combination with a type-1 web media has an entry (1,1) corresponding to a Table 1 type database. This entry contains all the information that characterizes the web distortion that occurs for a combination of this particular web media on this particular printing press. In general, a database as in Table 2 enables to retrieve web distortion information for a particular target print device and target web media to ensure that web distortion is fully compensated for.

In another embodiment, web distortion is further characterized for the amount of ink or ink density that is applied to the printed stock. This accounts for variances arising when the target image is, for example, highly colored. A larger degree of web distortion is expected in that case because of the degree to which the paper is wetted. The database in Table 2 in that case has three- rather than two-dimensional entries, wherein the third dimension corresponds to the amount ink that is applied to the web.

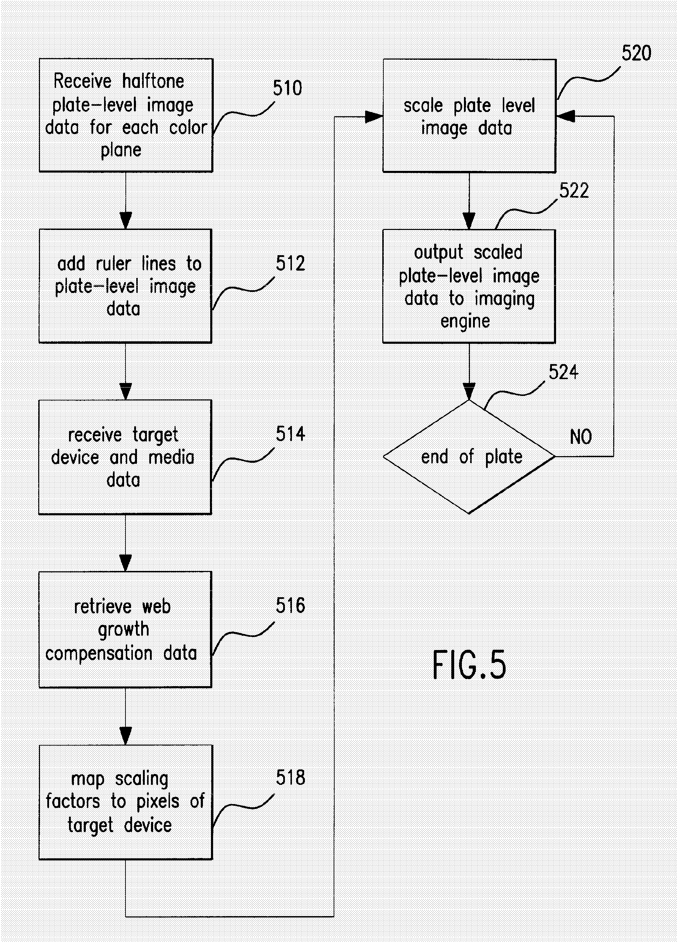

Fig. 5 shows the process for creating the masters for web offset printing using the web distortion information according to the principles of the present invention.

Specifically, in step (510), the halftoned plate-level image data for each colorant image are received by the print drive system (16). The print drive system (16) then adds the ruler grid (410-V, 412-H) in step (512). In the preferred embodiment, this grid is the same as the one used in the generation of the test image (5-test) and that is shown by way of example in Figs. 3A and 3B. The grid (410-V, 410-H) is added, in the preferred embodiment, to all of the printing runs, along with slug lines and any other additional images to the image data. This allows for on-going calibration and monitoring of the distortion compensation between the colorant images, even during press operation.

Then, in step (514), the operator enters the target device or the specific printing press on which the printing masters (5) are going to be installed and the target web print media. These two inputs enable the print drive system (16) in a step 516 to access the web distortion information for the given combination of printing press en web media. In the preferred embodiment, these are the actual distortion values as measured during a previous run or a test run of the web on the specific printing press.

In step 518, the web distortion compensation data and, specifically, the scaling factors are mapped to the physical pixels of the imaging engine 18. This identifies the actual pixels in the colorant planes of the plate-level image data that will be operated upon in order to effect the scaling.

With the pixels identified, the plate-level image data are scaled in step (520) and the scaled image data is output to the imaging engine in step (522). In the current embodiment, the scaling is performed in real-time during the exposure process in the imaging engine 18. This means that the scaling process must be computationally efficient so that the scaled data are produced at least as quickly as the imaging engine (18) consumes them.

The process of scaling and sending the data to the imaging engine in steps (520) and (522) is repeated until it is decided in step (524) that the printing masters for all colorants are created.

In one example, a single plate setter or image setter, including the print drive system (16) and the imaging engine (18), produces all of the plates for the printing run. In another example, multiple print drive systems (16) and imaging engines (18) are used to generate the printing masters (5). In still another example, the print drive system directly controls the creation of printing masters on rollers of the press.

Scaling to target device pixels

Given a description of how the printing process distorts the web (8) it is possible to correct the page-level halftoned colorant images in such a way that the distortion is compensated. At least two approaches are possible to achieve this objective.

According to a first possible approach the colorant image that is printed first serves as a reference image, and the colorant images that are printed subsequently are scaled so that registration is achieved across the area of the printed colorant images.

According to a second approach the colorant image that is printed last serves as a reference image, and the colorant images that are printed prior to this are scaled so that registration is achieved across the area of the printed colorant images.

Since in the most common case web distortion causes web growth, the first approach usually requires reducing the size of the subsequent colorant images, while the second approach requires increasing the size the previous colorant images.

In the present embodiment, the approach is to scale the plate-level colorant planes to achieve registration with the colorant that is last printed, which is usually yellow (Y) or black (B). This colorant image hence serves as the reference.

It was already explained that halftoned colorant image data that are produced by the raster image processor (10) for web offset printing are binary in nature. So are the plate-level colorant images that are produced by the imposition system (12).

The halftoning process results in a periodic pattern of halftone dots consisting of clustered pixels. The pattern is characterized by a frequency and an angle. In web offset printing angles are used that are multiples of 15 degrees, and the frequencies range from 35 to 60 halftone dots per cm (85 to 150 dots per inch).

The challenge when scaling these halftoned colorant images, is to this in a way that does not introduce interference with the halftone patterns or discontinuities or jaggedness in solid objects.

According to one embodiment, scaling is achieved by adding or removing rows and columns in the colorant images to achieve the desired image size. The problem with this approach is, however, that this can introduce an interference with the halftone pattern and that it adversely affects the consistency of the thickness of thin horizontal and vertical rules.

A preferred approach therefore involves the scattering of the row or column from which a pixel is removed or near which a pixel is inserted. For example, the equivalent of one row of pixels is removed in 20-row region by removing from each column exactly one pixel, preferably from a stochastically selected row, and the 20 rows are merged into 19 rows.

According to a preferred embodiment the scaling of a colorant image is done in two steps: first along a first dimension of the image, and next along the orthogonal dimension. This means, for example, that the scaling is first performed along the horizontal dimension of the colorant image and subsequently along the vertical dimension.

This scattering of the row or column from produces more consistent solid objects, but can still introduce interference patterns in halftoned data.

To suppress these interference patterns, the present embodiment uses knowledge of the characteristics of the halftone screen that was used by the raster image processor (10) to halftone the colorant image. More specifically information of the size of the halftone cell is used during the scaling operation as a method to reduce patterns as a result of the scaling. According to the present invention, the print drive system (16) finds this information in a database that is created for this purpose.

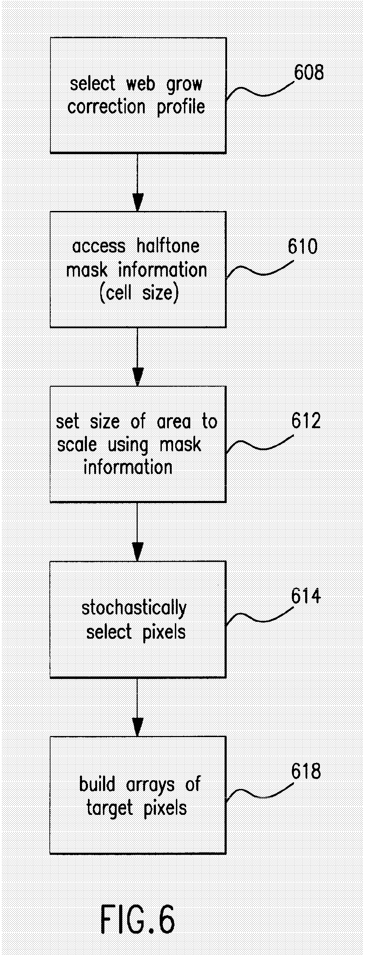

Fig. 6 illustrates the process for scaling the plate-level image data according to the preferred embodiment.

In a step (608), web distortion information selected in a database similar to the one in Table 1. The information describes the distortion measured on the target press when using the target web media.

In a step (610), the characteristics of the halftoning to create the halftoned plate-level colorant image are accessed, in a particular the cell size of the halftoned image.

In one example, the cell size of the halftone is obtained by interactively interrogating an operator via a user interface. In another example, this information is based on the information of the halftone mask that is directly received from the raster image processor together with the plate-level image data.

In step (612), the size of the row or column region is set from which pixels will be removed or to which pixels will be added as part of the scaling process of the plate-level colorant images. In the present embodiment, the size of this region is set equal to the value of the halftone cell size. If the cell size is not an integer number, than it is rounded to the closest integer number or to a multiple of the cell size that approximates an integer number.

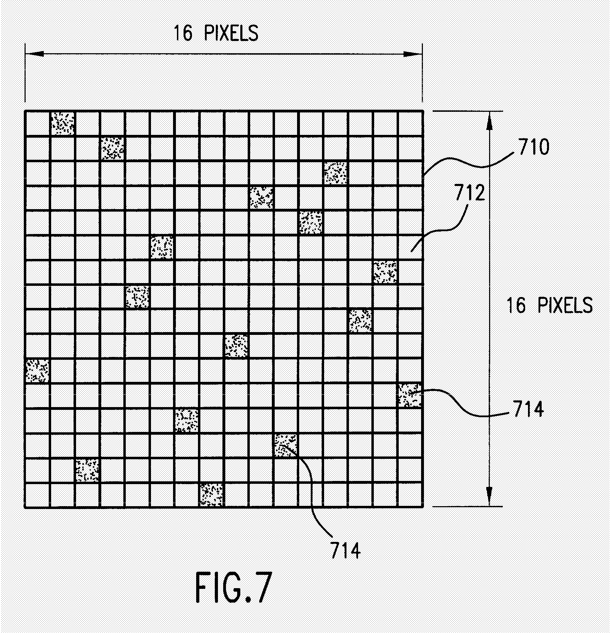

Having the size of the area defined from which pixels will be stochastically removed or to which they will be stochastically added, the next step consists of creating what is called a "scaling mask". A scaling mask (710) is a square matrix, having a size equal to the cell size, in which locations - called target pixels (714) - are identified, where a pixel will be removed or where a pixel will be added for the purpose of scaling. This is done in step (614). The selection of target pixels should be such that every row and every column of the scaling mask contains exactly one target pixel (714), and that they are stochastically distributed across the mask. This can be done using the following procedure: select an arbitrary row position for a first target pixel in the first column of the scaling mask; then select an arbitrary row position for a second target pixel in the second row - excluding the rows on which previously selected target pixels are located. Continue the process until target pixels are selected for all columns. Fig. 7 shows an exemplary scaling mask (710). It comprises 16 rows and 16 columns of pixels 712 that are mapped to the plate-level image data. Of the pixels, 16 target pixels 714 are identified. They have a stochastic distribution, but a unique column and row number.

Similar scaling masks are created and applied over a wider area of the plate-level colorant image. For example, to scale an area of 400 by 400 pixels when the cell size is equal to 16, 25 by 25 individual scaling masks (710) are calculated, each one with a different stochastic distribution of the target pixels. According to one aspect of the present invention, substantial computational reduction is achieved by starting from only a limited set of stochastically independent scaling masks, and stochastically selecting these masks to build a larger scaling mask. This larger scaling mask is than replicated over the image that is to be scaled. In the present embodiment, the width of a large scaling mask is limited to 200 pixels. For a cell size of 16, this means that a set of 12 by 12 stochastically independent scaling masks are calculated. Next larger scaling masks of 192 by 192 pixels are generated by stochastically selecting scaling masks from the set. In short, the 16x16 pixel scaling masks are stochastically generated and then the masks stochastically placed.

In another embodiment, especially where the amount of reduction or increase in size is small, the height of the area to reduce is expanded. For 0.1% case, for example, there is a need to duplicate/remove 1 out of every 1000 pixels, or merge 1000 rows to get 1001 or 999.

Returning to Fig. 6, in step 618, two arrays are built containing the set of target pixels 714 and scale directions (up/down). The directions and coordinates in the correction profile are relative to the leading edge of printed sheet: they are mapped to image space, upper left being (0,0) and lower right being (width-1, height-1). The resulting horizontal arrays are combined to form one array describing the image from left to right. The resulting vertical arrays are combined to one array describing the image from top to bottom.

Should the dimensions of the output media be different from the position ordinates in the correction profile, the appropriate position/distortion ordinates are preferably interpolated or extrapolated to match the media dimensions. The two arrays would then be combined into one array from west to east. The distortion values for each position are changed to be relative to each zone. A similar transformation is done for the north/south coordinates. The target pixel positions are calculated by: determining the number of pixels to add/delete for each position/distortion pair; and dividing the width of that region equally among the pixel to affect. For example, converting to image pixels at 2400 dots per inch, the following distortion values are generated in one example:

0,0
24000,96
48000,120
67200,96
96000,96

This means that: 96 of the 24000 pixels (0 to 23999) or one of 250 pixels must be deleted; 120 of the 24000 pixels (24000 to 47999) or one of 200 pixels is deleted; 96 of the 19200 pixels (48000 to 67199) or one of 200 pixels is deleted; and 96 of the 28800 pixels (67200 to 95999) or one of 300 pixels is deleted.

A targetPixel array containing numDelta = 432 target pixel positions (and scale direction) is generated from these data (250, 500, ..., 24000, 24200, ...). It will be necessary to track fractional pixels and adjust the target position if the zone width is not evenly divisible by the number of target pixels.

The minimum pixel span (in this case 200) and the halftone dot size will be used to generate an array of stochastic offsets from these pixel positions. For example, a 62.5 dots per cm halftone rendered at 1000 pixel per cm yields a halftone dot size of 16-pixels. A minimum span of 200 pixels allows for 12 16-pixel wide cells, which will occupy 192 pixels.

The length of the array of offsets will be a multiple of the halftone cell size (e.g. 128 * 16 = 2048). The contents of each cell are determined as:

```
#define ARRAYMULTIPLE 128

int shuffledValues[dotSize]
int offsetArray[ARRAYMULTIPLE * dotSize];
int numCells = minPixelSpan / dotSize;


for (i = 0; i < ARRAYMULTIPLE; i++)
{
        int cellOffset = dotSize * rand(numCells);
        GetShuffledValues(dotSize, shuffledValues);


        for (j = 0; j < dotSize; j++)
        {
                offsetArray[i* dotSize + j] = shuffledValues[j] +
cellOffset;
        }
}
```

where rand(intNum) returns a pseudo random value from 0 to intNum-1, and GetShuffledValues(intNum, array) fills array with the pseudo randomized values of 0 to intNum-1. The offset array contains offsets to apply to the target pixel array. The values are generated so each group of dotSize entries identifies a pixel within the same halftone dot area, and that the dotSize pixels are in different rows/colums of the dotSize area.

By combining the target pixel and offset arrays, a two dimensional array of pixels (and scale directions) to delete (or duplicate) is generated.

```
for (x = 0; x < numDelta; x++)
{
        for (y = 0; y < ARRAYMULTIPLE * dotSize; y++)


        {
// pixel to affect
                pixelPos[x][y].pos = targetArray[x].pos - offsetArray[y];
                // delete or duplicate
                pixelPos[x][y].dir = targetArray[x].dir;
        }
}
```

Scaling horizontally on-the-Fly

To change the width of the image, it is required to delete or duplicate specific pixels for each row. To do this on the fly it is required to further simplify the data. As adjustments to the image are mainly shifting the data and occasionally deleting or duplicating a pixel, the pixelPos array is distilled into a list of commands for a shifting engine.

The shift commands contain a header with count of excess pixel at the start of line (padding for lines with more deleted than duplicated pixel; pixel clip count for the converse) and a trailer to flag the end of the row. The pixelPos values will be broken into zones (areas of pixel deletion and areas of pixel duplication). A zone header specifies the scale direction (delete or duplicate) and initial shift count. It is followed by pairs of values: the first containing the number of longs (32 bit groups of image data) to shift and copy; and the second the offset to the pixel in the next shifted long to delete or duplicate. The final entry in a zone is a trailer, which notifies the shifting engine to look for the next zone header or list's end of row trailer.

In the present embodiment, the shift engine is written in Intel assembler and uses the following macro to load source image data, shift the image data "s" locations (0 to 31), store the shifted image, and load and shift the data containing the pixel to delete or duplicate.

```
        // eax:edx contain next 0-63 pixels of image data
        // ebx-> long count / pixel offset




// esi->source image, edi->output image
// arg "s" is the number of pixels to shift, "dir" is Del(ete) or
Dup(licate)
#define ShiftAndCopy32(s,dir)
ShiftAndCopy32_##Dir:
        mov   curShift,s
        mov   ecx, [ebx]ShiftCmds.dirCnt
        add   ebx, 8
        jcxz  ShiftAndCopy_32_1


ShiftAndCopy_32_0_##Dir:
        shrd eax, edx, s
        stos eax
        lods eax
        xchg eax, edx
        loop ShiftAndCopy_32_0_##Dir


ShiftAndCopy_32_1:
        mov   ecx, [ebx-4]ShiftCmds.pix
        shrd eax, edx, s
```

The code to delete pixels makes use of the ShiftAndCopy macro, then loads the pixel offset (-1 flags end of zone), isolates and removes the pixel, fills the vacant 32nd pixel from the next pixel in source image.

```
                    #define SHIFT_AND_COPY_32_DEL(s)
                        SHIFT_AND_COPY_32(s,Del)
        test ecx, ecx
                        js    ScaleRowNextZone


                        rcr   eax, 1
                        rcr   eax, cl
                        rol   eax, 1
                        rol   eax, cl
                        shr   edx, s
                        shrd eax, edx, 1


                        stos  eax


                        add       esi, 4
                        mov       eax, [esi-8]
                        mov       edx, [esi-4]
```

The code to duplicate pixels makes use of the ShiftAndCopy macro, then loads the pixel offset (-1 flags end of zone), isolates and duplicates the pixel, the original 32nd pixel will be reloaded for the next set of copy/pixel offset commands.

```
#define SHIFT_AND_COPY_32_DUP(s)
        SHIFT_AND_COPY_32(s,Dup)
        test ecx, ecx
        js   ScaleRowNextZone


        ror  eax, 1
        ror  eax, cl
        rcl  eax, 2
        rcl  eax, cl
        stos eax


        add  esi, 4
        mov  eax, [esi-8]
        mov  edx, [esi-4]
```

As pixels are deleted the shift count will increase by 1; as pixels are duplicated the shift count will decrease by 1. By stringing together a series of macro calls, adjusting for shifting into/from a new 32-bit field, and handling the end of zone trailer, the required shifting engine is defined.

```
ResetShiftCountDel:
        SHIFT_AND_COPY_32_DEL( 0);
        SHIFT_AND_COPY_32_DEL( 1);
        .

        .
```

```
.

        SHIFT_AND_COPY_32_DEL(31);


        // adjust for lost 32 bits of input after shifting 31 + 1
        __asm mov       eax, edx
        __asm mov       edx, [esi]
        __asm add       esi, 4


        goto ResetShiftCountDel;



ResetShiftCountDup:


        SHIFT_AND_COPY_32_DUP(31);
        SHIFT_AND_COPY_32_DUP(30);
            .

            .

            .
        SHIFT_AND_COPY_32_DUP( 0);


        // adjust for b31 which we still need for next 32 bits
        __asm sub       esi, 4
        __asm mov       eax, [esi-8]
        __asm mov       edx, [esi-4]


        goto ResetShiftCountDup;
```

```
ScaleRowNextZone:

        // get scale direction; 0 = scale down, 1 = scale up, < 0 =
done
        mov         ecx, [ebx]ShiftCmds.dirCnt
        add         ebx, TYPE ShiftCmds
        test ecx, ecx
        js          ScaleRow_Done


        // set up vector 0/1 -> 0/32; 0-31 scale down, 32-63 scale up
        shl         ecx, 5
        // add in amount to shift
        add         ecx, curShift
        // convert to byte offset into a table of 32 bit addresses
        shl         ecx, 2
        // add in base of table
        add         ecx, vectorTable
        mov         ecx, [ecx]
        // go to it
        jmp         ecx
```

Other processing required includes padding the start and end of the output image as needed and mapping the source row index to an index into the array of shift commands.

Scaling Vertically on-the-Fly

The process for creating the pixelPos needs to be repeated for vertical scaling, which is implemented as described previously by replacing rows/columns.
To change the height of the image, it is required to delete or duplicate specific pixels for each column. To do this on the fly we need to further simplify the data. As adjustments to the image are mainly shifting the data and occasionally deleting of duplicating a pixel, the offsetArray is distilled into an array of mask rows. A maskArray consists of (minPixelSpan / dotSize) * dotSize rows, each row containing ARRAYMULTIPLE * dotSize pixels. The maskArray will be initialized to 0s. The value in the offsetArray will be the row index into the maskArray; the index into the offsetArray will be the pixel index into a row of the maskArray. All maskArray pixels identified from the offsetArray will be set to Is. The rows of the maskArray are then sequentially ORed together (i.e. ..., row[i+1] = row[i] | row[i+1], row[i+2] = row[i+1] | row[i+2], ...). So for any given row, i, of the maskArray the pixels of interest for rows 0 to i will be set to 1s. A targetRow array (similar to targetPixel array) will identify the beginning of a set of rows to affect. Any source image row that is not part of a mergeRange (targetArray[i] to targetArray[i] + (minPixelSpan / dotSize) * dotSize - 1) is copied from the source image to the output image.
A mergeRange that requires the deletion of a row will logically OR the contents of:

$$SourceRow[i] \& \sim maskArray[i \% + ((minPixelSpan / dotSize) * dotSize)]$$

and

SourceRow[i+1] & maskArray[i % + ((minPixelSpan / dotSize) * dotSize)]

to create ouputRow[i].

This is done for each output row. As we advance through the bytes of source rows and the maskArray, we must reset the maskArray's byte index when it exceeds ARRAYMULTIPLE * dotSize / 8 pixels. A mergeRange that requires the duplication of a row will: 1) copy the first source row of the mergeRange; 2) logically OR the contents as follows:

SourceRow[i] & maskArray[i % + ((minPixelSpan / dotSize) * dotSize)] and

SourceRow[i+1] & ~maskArray[i % + ((minPixelSpan / dotSize) * dotSize)]
to create ouputRow[i];

3) copy the last source row of the merge range.

This is done for each output row. As we advance through the bytes of source rows and the maskArray, we must reset the maskArray's byte index when it exceeds ARRAYMULTIPLE * dotSize / 8 pixels.
NOTE: the logical combination of source and maskArray rows is best done in Intel Assembler with the MMX instruction set (64-bit operations). Also, additional processing will include padding the top and bottom of the output image.

While this invention has been particularly shown and described with references to preferred embodiments thereof, it will be understood by those skilled in the art that various changes in form and details may be made therein without departing from the scope of the invention encompassed by the appended claims.

**Claims**

1. A method for exposing offset printing media with image data that have to be scaled to compensate for web distortion, the method comprising:

   - generating scaled image data in response to web distortion information and plate-level image data;
   - exposing the offset printing media in response to said scaled image data;
   - optionally generating plate-level image data by combining page-level image data from more than one page in an imposition step;
   - optionally halftoning page-level images into page-level image data for each colorant.

2. A method according to claim 1, wherein the web distortion information is based on measurements at multiple places on a web (8), optionally starting from a center of the printed image.

3. A method according to claim 2, wherein the web distortion is measured by printing a grid in each colorant and measuring the distortion between these grids.

4. A method according to any one of the previous claims, wherein the offset printing media are either film that is used to make printing plates, printing plates or rollers for a web printing press (25).

5. A method according to any one of the previous claims, further comprising generating said scaled image data during a transfer of said scaled image data to an imaging engine (18).

6. A method according to any one of the previous claims, further comprising generating the scaled image data by adding pixels to and/or removing pixels from the plate-level image data wherein the adding and/or removing of the pixels is optionally stochastically distributed between rows or columns.

7. A system (100) for exposing offset printing media with image data that have to be scaled to compensate for web distortion, the system comprising:

   - a print drive system (16) that receives plate-level image data and generates scaled image data in response to web distortion optionally according to any of the methods in the previous claims;
   - an imaging engine (18) for exposing the offset printing media in response to said scaled image data;
   - optionally an imposition system (12) that generates the plate-level image data by combining page-level image data from more than one page;

- optionally a raster image processor (10) that halftones page-level images into page-level image data for each colorant.

8. A web printed image, comprising:

- areas corresponding to page-level image data; and
- indicia for assessing web distortion.

9. A web printed image according to claim 8, wherein the indicia comprise a grid, that is optionally centered between the page-level image data and that optionally extends from a center in four directions.

10. A web printed image according to any one of the claims 8 or 9, wherein the grid is added after application of web distortion compensation.

FIG.1

Receive halftone
plate—level test
image data for
each color plane
210

add ruler lines to
plate—level test
image data
212

mount the plates on
press
214

register the colors
to the center of the
grid
216

measure deviation
from the reference
(last) color
218

FIG.2

FIG.3A

FIG.3B

FIG.4

Receive halftone plate–level image data for each color plane — 510

add ruler lines to plate–level image data — 512

receive target device and media data — 514

retrieve web growth compensation data — 516

map scaling factors to pixels of target device — 518

scale plate level image data — 520

output scaled plate–level image data to imaging engine — 522

end of plate — 524

NO

FIG.5

```
┌─────────────────────┐
│  select web grow    │ ─── 608
│  correction profile │
└─────────────────────┘
          │
          ▼
┌─────────────────────┐
│  access halftone    │ ─── 610
│  mask information   │
│  (cell size)        │
└─────────────────────┘
          │
          ▼
┌─────────────────────┐
│  set size of area to│ ─── 612
│  scale using mask   │
│  information        │
└─────────────────────┘
          │
          ▼
┌─────────────────────┐
│  stochastically     │ ─── 614
│  select pixels      │
└─────────────────────┘
          │
          ▼
┌─────────────────────┐
│  build arrays of    │ ─── 618
│  target pixels      │
└─────────────────────┘
```

FIG.6

FIG.7